# EUROPÄISCHE PATENTSCHRIFT

(11) **EP 2 633 600 B1**
(45) Veröffentlichungstag und Bekanntmachung des Hinweises auf die Patenterteilung: **30.01.2019**
(21) Anmeldenummer: 11802267.2
(22) Anmeldetag: 28.10.2011
(51) Int. Cl.: H02J 13/00

(54) **VERFAHREN ZUR KURZZYKLISCHEN DATENERFASSUNG, ZUM ENERGIEMONITORING UND ZUR NETZSTEUERUNG IM SMART METERING/SMART GRID UNTER VERWENDUNG EINER VERTEILTEN, INTELLIGENTEN MIDDLEWARE**
METHOD FOR SHORT-CYCLIC DATA CAPTURE, FOR ENERGY MONITORING AND FOR SYSTEM CONTROL IN THE SMART METERING/SMART GRID USING A PIECE OF DISTRIBUTED, INTELLIGENT MIDDLEWARE
PROCÉDÉ DE DÉTECTION DE DONNÉES À CYCLE COURT, POUR LA SURVEILLANCE DE L'ÉNERGIE ET POUR LA COMMANDE DE RÉSEAU DANS LE SYSTÈME DE COMPTEUR INTELLIGENT/RÉSEAU ÉLECTRIQUE INTELLIGENT À L'AIDE D'UN LOGICIEL MÉDIATEUR INTELLIGENT DISTRIBUÉ

(30) Priorität: 28.10.2010 DE 102010049628
(43) Veröffentlichungstag der Anmeldung: 04.09.2013
(73) Patentinhaber: CBB Software GmbH, 23562 Lübeck (DE)
(72) Erfinder: KAZAKOV, Dmitry, 23560 Lübeck (DE); GAEBEL, Clark, 23560 Lübeck (DE)
(74) Vertreter: Eisenführ Speiser
(86) Internationale Anmeldenummer: PCT/EP2011/005451
(87) Internationale Veröffentlichungsnummer: WO 2012/055566

(56) Entgegenhaltungen:
- EP-A1- 1 887 743
- EP-A1- 2 026 299
- WO-A1-2006/055334
- WO-A1-2009/048963
- WO-A2-2010/077830
- US-A1- 2009 267 792
- US-B1- 6 785 592

## Beschreibung

Die Erfindung betrifft ein Verfahren zur kurzzyklischen Datenerfassung, Energiemonitoring und Netzsteuerung im Smart Metering/Smart Grid unter Verwendung einer intelligenten, verteilten Middleware.

Das klassische Energieversorgungsnetz hat eine zentralistische Struktur. Die Energie wird in dieser Netztopologie zumeist von wenigen großen Kraftwerken erzeugt und unidirektional an die Endverbraucher verteilt. Mit dem wachsenden Umweltbewusstsein steigt auch der Anteil an erneuerbaren Energien, wie Wind- und Sonnenenergie in den Energieversorgungsnetzen rapide an. Die Verfügbarkeit von Wind und Sonnenenergie ist jedoch fluktuierend und somit nicht planbar. Hinzu kommt, dass in der Regel erneuerbare Energie in kleineren Einheiten über das gesamte Energienetz, örtlich verteilt generiert wird. Das moderne elektrische Netz wird somit komplexer, inhomogener und im Hinblick auf die Energieerzeugung im hohen Maße verteilt. Ein idealer Zustand, zwischen Energieerzeugung, -verteilung und -verbrauch würde im Sinne von Energieeffizienz herrschen, wenn
1. nur dann Energie erzeugt wird, wenn sie gebraucht wird und wenn
2. nur genauso viel generiert wird wie benötigt wird und
3. wenn sie genau an dem Ort erzeugt wird, wo sie gerade benötigt wird.

Es sei denn, man könnte elektrische Energie hinreichend geeignet speichern. Das ist aber nicht der Fall. Elektrische Energie lässt sich bis heute nicht zufriedenstellend speichern. Um diesen neuen Anforderungen der Energieeffizienz gerecht zu werden, müssen die Energieversorgungsnetze in Zukunft intelligenter sein: "Smart Grid". Sie müssen kurzzyklisch (zeitnah) einen bidirektionalen Last- und Informationsfluss zwischen allen zentralen und dezentralen fossilen und regenerativen Energieerzeugern, Netzkomponenten, Speichern und Verbrauchern ermöglichen. Damit soll eine abgestimmte kosteneffiziente Energiewirtschaft ermöglicht werden. Die Zukunft heißt intelligentes Energie- und Kommunikationsnetzwerk mit verteilten Energieressourcen.

Die Steigerung der Energieeffizienz gilt für Kraftwerksbetreiber wie auch für Produktion und Haushalte, die zusätzlich zunehmend zu verteilten Energieerzeugern werden, gleichermaßen. Hierfür müssen geeignete Energie Monitoring und Control Systeme bereitgestellt werden.

Die WO 2009/048963 A1 offenbart ein System zur intelligenten webbasierten Überwachung und Verwaltung eines elektrischen Systems. Das System umfasst eine Datenerfassungskomponente, an die ein Sensor angeschlossen ist, der Echtzeitdaten erfasst, die vom elektrischen System ausgegeben werden, und einen Webanwendungsserver, der mit der Datenerfassungskomponente gekoppelt und konfiguriert ist, eine Benutzerschnittstelle an ein Client-Endgerät zu senden. Der Webanwendungsserver weist eine virtuelle Systemmodelldatenbank, die mit der Datenerfassungskomponente gekoppelt ist und ein virtuelles Systemmodell des elektrischen Systems generiert, eine Kraftanalyse-Simulationsmaschine mit einer virtuellen System-Modulierungsmaschine, die Daten für das elektrische System unter Verwendung des virtuellen Systemmodells des elektrischen Systems erzeugt, und eine mit der virtuellen Systemmodelldatenbank gekoppelte Analytikmaschine auf.

Die WO 2010/077830 A2 befasst sich mit einem Stromnetzausfall- und Fehlerzustandsmanagement, indem Ereignisinformationen empfangen werden, die verschiedenen Vorrichtungen innerhalb eines Stromnetzes zuzuordnen sind. Basierend auf den Ereignisinformationen wird ein Zustand für die verschiedenen Geräte ermittelt. Dabei wird festgestellt, ob eine Ausfallbedingung einer bestimmten Vorrichtung zugeordnet ist. Dabei kommt eine Fehlerintelligenzanwendung zum Einsatz, die Synchrophasor-Daten für jede Phase in einem mehrphasigen Stromnetz empfängt. Der Synchrophasor weist für jede Phase einen Phasor-Betrag und eine Phasor-Winkelinformation auf. Die Fehlerintelligenzanwendung ermittelt auf der Grundlage der Synchrophasor-Daten das Vorliegen eines Fehlers in einer oder mehreren der Phasen und identifiziert einen bestimmten Fehlertyp.

Die EP 2 026 299 A1 beschreibt ein Zwischenschaltgerät, das zwischen einem intelligenten Stromzähler und einem Stromverbraucher geschaltet ist, wobei der Stromverbraucher einen schwankenden Stromverbrauch hat, der von dem Typ und dem Nutzungsverhalten des Stromverbrauchers abhängt und somit eine informationshaltige Stromsignatur bildet. Somit lässt eine Messung des Stromverbrauches einen Rückschluss auf den Typ und/oder das Nutzungsverhalten des Stromverbrauchers zu. Das Zwischenschaltgerät verschleiert den Zusammenhang zwischen dem von dem Stromzähler gemessenen Stromverbrauch des Stromverbrauchers einerseits und dem Typ und/oder dem Nutzungsverhalten des Stromverbrauchers andererseits, um die informationshaltige Stromsignatur des Stromverbrauchers zu verbergen und dadurch eine Ausspähung durch eine Stromauswertung zu erschweren.

Die EP 1 887 743 A1 offenbart ein Verfahren und ein System zur adaptiven Verarbeitung der Qualität eines Dienstes von Interaktionen zwischen intelligenten Netzwerken und Unternehmungsanwendungen unter Verwendung einer Middleware-Nachrichten-Routing-Maschine.

Die US 6,785,592 B1 offenbart ein Verfahren und eine Vorrichtung zur Prognose des Energieverbrauches einer industriellen Produktionsanlage, bei dem für einen Prognosezeitraum geplante Produktionsmengen als Eingangsdaten in ein neuronales Netz eingegeben und Energieverbräuche für den Prognosezeitraum als Ausgangsdaten vom neuronalen Netz ermittelt werden. Das neuronale Netz wird mit bekannten historischen Ein- und Ausgangsdaten trainiert, wobei die Anzahl an historischen Eingangsdaten durch Bildung gewichteter Summen von Eingangsdaten reduziert, zur Bestimmung von Gewichtungsfaktoren für die Bildung der gewichteten Summen ein Optimierungsproblem mit einer vorgegebenen Zielbedingung formuliert und aus den bekannten Zusammenhängen, nach welchen sich die Ausgangsdaten aus den Eingangsdaten ergeben, zunächst ein Gleichungssystem mit Gewichtungsfaktoren als Variable aufgestellt wird. Anschließend werden die Gewichtungsfaktoren in Abhängigkeit von der Zielbedingung für die Abweichungen der aus den jeweils zuletzt bestimmten Gewichtungsfaktoren berechneten Ausgangsdaten neu bestimmt.

Die US 2009/267792 A1 beschreibt ein Verfahren zur Durchführung einer automatischen Zählerablesung in einem Netzwerk mit mehreren Vorrichtungen zur automatischen Zählerablesung oder Knoten an Kundenstandorten, wobei eine Vielzahl von Zugangspunkten in dem Netzwerk unter Verwendung ausgewählter Dienstkundenstandorte, wobei es sich bei den zugehörigen Kunden um Mitarbeiter einer Anwendung handelt, und unter Verwendung weiterer ausgewählter Dienstkundenstandorte, wobei es sich bei den zugehörigen Kunden nicht um Mitarbeiter der Anwendung handelt, sowie unter Verwendung von dienstkonstruierten Standorten implementiert wird. Diese Zugangspunkte werden mit einem globalen Kommunikationsnetzwerk gekoppelt, und zwar durch Auswahl einer Vielzahl von Kundenknoten zur Bereitstellung einer Teilmenge von kolokalisierten Zugangspunkten an ihren Zählerplätzen, Rekrutierung und Verwendung einer Vielzahl von Dienstmitarbeitern, die Kunden sind, um eine mitarbeitergestützte Teilmenge der zusammengestellten Zugangspunkte an ihren Zählerplätzen bereitzustellen, Rekrutierung und Nutzung mehrerer Nicht-Mitbearbeiter-Dienstkunden zur Bereitstellung einer Teilmenge der zusammengestellten Zugangspunkte an ihren Zählerplätzen und Bereitstellung und Verwendung einer Vielzahl von dienstgesteuerten Standorten, die eine Untermenge der Zugangspunkte bilden. Ferner umfasst das bekannte Verfahren eine Bestimmung der Warennutzung mit den Vorrichtungen für eine automatische Zählerablesung und eine Übertragung der Warennutzungsdaten von den kundenseitigen Vorrichtungen für eine automatische Zählerablesung durch das Netzwerk über die Zugangspunkte, und zwar durch Hopping der Daten von einem Knoten zu einem anderen Knoten in dem Netzwerk, Empfangen der Daten an einem Knoten, der einen kolokalisierten Zugangspunkt aufweist, Einspeisen dieser Daten in das globale Kommunikationsnetzwerk über den gemeinsamen Zugangspunkt und Empfangen der Daten an der Dienstleistung über das globale Kommunikationsnetz.

Die WO 2006/055334 A1 offenbart ein Verfahren und ein System zur Steuerung eines Klimas in einem Gebäude. Hierzu werden an einem lokalen Prozessor im Gebäude erfasste Daten empfangen, die dem Klima im Gebäude, dem Wetter außerhalb des Gebäudes und/oder den Insassen des Gebäudes zugeordnet sind. Die empfangenen erfassten Daten werden vom lokalen Prozessor mit entsprechenden Vorhersagedaten betreffend das Klima im Gebäude, das Wetter außerhalb des Gebäudes und/oder die Insassen des Gebäudes verglichen. Vorgeschlagen wird von der Erfindung nun ein Verfahren zur verteilten, intelligenten, kurzzyklischen Datenerfassung und Steuerung für eine große Anzahl an Messpunkten nach den Anforderungen an ein intelligentes Energieversorgungsnetz, bei welchem
- mehrere im Energieversorgungsnetz verteilte Server verwendet werden, die gemeinsam eine Middleware bilden,
- durch die Middleware unter Verwendung eines Middleware-Interface Messwerte (MW) von digitalen Messgeräten und Zählerwerte (ZW) kurzzyklisch erfasst und die digitalen Messgeräte sowie weitere Sensoren und Aktoren gesteuert werden,
- die Messgeräte in Gruppen zusammengefasst sind, die jeweils einem Server zugeordnet sind, den Messwerten (MW) Tarifinformationen (TR) in der Middleware zugeordnet werden, wobei das Middleware-Interface zuständig für die Bereitstellung der Zählerwerte (ZW) und die Weiterleitung von übergeordneten Steuersignalen ist und die kurzzyklische Datenerfassung eine Erfassung von Messwerten im Zeitintervall von 20ms bis 5s für je nach Netzgröße von 1000 bis zu einigen 10000 Endgeräten und je nach Leistungsfähigkeit der digitalen Messgeräte bedeutet,
- die Messwerte (MW) und die Zählerwerte (ZW) in der Middleware durch Signaturverifikation (SV) einer Gültigkeitsprüfung unterzogen werden,
- ein Abbild des Zustandes des Energieversorgungsnetzes in Speichervariablen (HD) und einem Rohwertspeicher in der Middleware zyklisch bereitgestellt wird und Zeitstempel automatisch hinzugefügt werden,
- die Messwerte (MW) in anonymisierter Form mit einer Zähleridentifikation in der Middleware durch interne Middlewaredienste (MD) verknüpft werden,
- eine Anonymisierung von Zählerwerten (ZW) durch Ersetzen der Beschreibung des Messwertursprungs (z.B. Geräteidentifikation) mit Hilfe eines Anonymisierungs-Middlewaredienstes (A-MD) erfolgt,
- ein Middlewaredienst (MD) für eine Zuordnung der Messwerte (MW) zu Endgeräten zuständig ist und eine Zuordnung dafür sorgt, dass der Zählerwert (ZW) eines Endgerätes immer rekonstruierbar bleibt,
- die Datenerfassung und die Steuerung von internen Middlewarediensten (MD) in der Middleware übernommen werden,
- die Server über ein Kommunikationsnetzwerk miteinander verbunden sind und über interne Netzwerkschnittstellen kommunizieren, damit die Messwerte und die Zählerwerte an jedem Server verfügbar sind,
- die Kommunikation mit den digitalen Messgeräten nach einem von einem Smart-Messgerät (S-MG) oder Lean-Messgerät (L-MG) vorgegebenen Protokoll erfolgt und für die Kommunikation das Middleware-Interface eingesetzt wird, wobei ein Smart-Messgerät (S-MG) eine Intelligenz besitzt und zu einer Vorverarbeitung der Messwerte (MW) ausgebildet ist, während ein Lean-Messgerät (L-MG) keine Intelligenz besitzt und nur zur Ausgabe von unbearbeiteten Messwerten (MW) ausgebildet ist,
- für Lean-Messgeräte (L-MG) die Verknüpfung von Zählerwerten (ZW) und Tarifinformationen (TR) durch einen Middlewaredienst (S-MD) durchgeführt wird,
- für Smart-Messgeräte (S-MG) die Verknüpfung von Tarifinformationen (TR) von dem Gerät gewährleistet wird und
- ein weiterer Middlewaredienst (L-MD) eine entsprechende Tarifstruktur (TRS) des Gerätes steuert und die Synchronisation einer integrierten Uhr übernimmt.

Bevorzugte Ausführungen und Weiterbildungen der Erfindung sind in den abhängigen Ansprüchen angegeben.

Das hier beschriebene Verfahren ermöglicht es, IT-Infrastrukturen zu implementieren, die kurzzyklische und bidirektionale Daten- und Ereignisübertragungen gewährleisten und mit denen Energieeffizienz-Konzepte sowohl im "Smart Grid" als auch in der Produktion (Green Production) und in Haushalten (Green House) wirkungsvoll umgesetzt werden können.

Das vorgestellte Verfahren ist dadurch gekennzeichnet, dass es die Intelligenz in die Informationsinfrastruktur des "Smart Grid" als verteilte Middleware, bedarfsgerecht örtlich verteilt. Somit kann sie einer vorliegenden Energienetztopologie optimal angepasst und entsprechend verteilt werden (Clusterung). Die verteilte Middleware ist in der Lage kurzzyklisch (zeitnah) mit Hilfe von digitalen Messgeräten bei den Endverbrauchern und weiteren Sensoren den Zustand des jeweiligen Energienetz-Cluster zu erfassen.

Die verteilte Middleware setzt dann nach der Datenerfassung eine entsprechende Optimierungsstrategie, beispielsweise zur Regelung des Energieflusses, entweder selbst in Gang oder ruft die Optimierung durch eine übergeordnete Applikation (App) auf. Jeder intelligente Knoten der Middleware kann durch ein ressourcenarmes System (Embedded-System) realisiert und dynamisch, flexibel ausgelegt werden.

Eine Middleware ist im Allgemeinen eine Dateninfrastruktur und stellt normalerweise eine Ebene in einem Softwaresystem dar, welche den Datenaustausch und die Übermittlung von Ereignissen zwischen einzelnen Softwarekomponenten (Applikationen App) ermöglicht. Mit der Middleware können Softwarekomponenten (App) mit verschiedenen Architekturen (Datenformate, Programmiersprache, Betriebssysteme, Topologien) miteinander verbunden werden.

Die Middleware besitzt einheitliche und übergreifende Methoden zur Definition von Daten und Ereignissen. Jede Softwarekomponente/ Applikation (App) erhält für die Anbindung an die Middleware ein Interface. Die Aufgaben des Interfaces ist die Umwandlung von applikationsspezifischer Semantik zu Middleware-Definitionen und umgekehrt. Die Middleware ist auf Schicht 7 des ISO/OSI Schichtenmodells angesiedelt und arbeitet klassisch nicht auf der Feld-Ebene.

Für die Kommunikation werden am häufigsten Netzwerkprotokolle basierend auf TCP/IP (Transmission Control Protocol/Internet Protocol) oder UDP (User Datagram Protocol) verwendet, welche auch von den meisten Office Anwendungen unterstützt werden. Die Kommunikation läuft pro Interface bidirektional ab, das heißt, Applikationen (App) können die Daten über nur eine einzige Schnittstelle senden und empfangen.

Ein Smart Grid/ Smart Metering bezeichnet eine intelligente Energieinfrastruktur, welche elektrische Energie zugeschnitten auf den momentanen Bedarf liefern soll, bzw. den aktuellen Bedarf in Abhängigkeit des momentanen Energieangebotes regeln soll. Dies erfolgt durch komplexes Verwalten und Steuern von Energieerzeugungsanlagen, -speichern und -verbrauchern, sodass ständig ein Gleichgewicht zwischen Lieferung und Bezug der elektrischen Energie herrscht. Hierfür ist es notwendig, die aktuellen Netzzustände zeitnah zu erfassen. Dies bedeutet, dass im gesamten Stromnetz, insbesondere an wichtigen Knotenpunkten, eine Vielzahl an Sensoren und Aktoren installiert sind. Ein Netzzustandsabbild in einem stark verteilten Netz zu erzeugen bedeutet ein hohes Datenaufkommen zielgerecht zu erfassen, zu verteilen, zu strukturieren und zu präsentieren. Dazu ist ein hochperformantes Kommunikationsnetz erforderlich. Die Topologie dieses Netzes soll räumlich und zeitlich flexibel ausführbar sein, wodurch eine netzwerkunabhängige Identifikation der Sensoren und Aktoren notwendig wird.

Zur Erfassung weiterer Netzdaten werden in den einzelnen Haushalten digitale Messgeräte wie intelligente Stromzähler, auch bekannt als Smart Meter, installiert. Dies sind Messeinrichtungen, welche die Verbrauchs- bzw. Erzeugungswerte digital erfassen und diese über Kommunikationsschnittstellen zur Verfügung stellen. Über die Schnittstellen werden diese Meter ebenfalls mit in das dynamische Kommunikationsnetz eingebunden. Aus datenschutzrechtlichen Gründen sollten die Informationen von den digitalen Messgeräten verschlüsselt übertragen oder anonymisiert werden. Eine Signierung von Messwerten soll die Richtigkeit der Daten sicherstellen. Im Folgenden wird für die Bezeichnung von digitalen Messgeräten für elektrische Energie neben Smart Meter auch Smart-Messgerät (S-MG) verwendet. Ebenfalls wird die Bezeichnung Lean-Messgerät (L-MG) verwendet, welche eine weitere Variante eines digitalen Messgerätes darstellt.

Die bisherige Datenerfassung von Smart-Messgeräten (S-MG) erfolgt beim Energieversorgungsunternehmen (EVU) oder Messstellenbetreiber (MSB) meist für nur wenige hundert Geräte für die Abrechnung von Sondervertragskunden. Diese Kunden haben einen so hohen Energieverbrauch, dass sie ein Recht auf eine monatliche Abrechnung und eine Bereitstellung ihrer Verbrauchsdaten in 15min Intervallen besitzen.

Mit einer einzelnen auf einem zentralen Server installierten Software und passenden Softwaremodulen für die bei den Kunden installierten digitalen Messgeräte werden statische und im Gerät abgespeicherte Daten erfasst. Lediglich die zum Zeitpunkt der Auslesung vorherrschenden Bedingungen können erfasst werden.

In Einzelfällen kommt auch eine Middleware zum Einsatz. Dabei handelt es sich um zentrale Middleware, die nur auf einem Knoten bzw. Server laufen. Dies führt zu einer eingeschränkten Skalierbarkeit.

Typischer Weise erfolgt die Datenerfassung nur einmal am Tag nach einem programmierten Zeitplan oder nach manuellem Befehl. Sie muss vom Anwender regelmäßig kontrolliert werden. Die Messwerte werden dann von der Software in einer integrierten oder externen Datenbank abgespeichert und den Kunden monatlich vom EVU oder MSB zur Verfügung gestellt.

Bei jeder Datenauslesung wird nacheinander, oder in wenigen Fällen auch parallel, eine Punkt zu Punkt-Verbindung zu jedem Gerät hergestellt, die im Messgerät gespeicherten Messwerte im Intervall seit der letzten Auslesung übertragen und anschließend die Verbindung wieder getrennt.

Die Kommunikation erfolgt bei den herkömmlichen Auslesesystemen häufig über GSM (Global System for Mobile Communication) mit dem GPRS-Protokoll (General Packet Radio Service) - Verwendung des Mobilfunknetzes. Andere Übertragungsmöglichkeiten sind PLC (Powerline Communication) - Nutzung des vorhandenen Stromnetzes - oder proprietäre Funknetze.

Der Energiemarkt steht mit den Anforderungen, die durch Smart Grid/ Smart Metering definiert werden, vor neuen Herausforderungen. Die geschätzte Zahl der fluktuierenden Energieanteile, unter Einbeziehung von Blockheizkraftwerken, im Energienetz wird in den kommenden 10 Jahren um ca. 40 % steigen. Die Topologien der Energienetze müssen deshalb neu aufgelegt und entworfen werden. Das ist eine dringliche Voraussetzung, um die Integration der fluktuierenden Energie erfolgreich zu betreiben. Energietransfer, Lastmanagement und nicht zuletzt das Transaktions-Management müssen parallel hierzu neu geregelt werden. Das Verbraucher/ Erzeugerverhalten von Haushalten, Handwerksbetrieben sowie kleinen und mittleren Unternehmen wird für die Steigerung der Energieeffizienz im Smart Grid/ Smart Metering eine bedeutende Rolle spielen. Internet und eigene Breitband IT-Infrastrukturen der Energieversorger bzw. Messstellenbetreiber werden und müssen hinzugezogen werden, um die neuen Aufgaben bewältigen zu können. Eine wichtige Fragestellung ist die kurzzyklische Massendatenerfassung von mehreren tausend Energiemessgeräten (quasi in Echtzeit). Hierfür ist eine leistungsfähige IT-Infrastruktur mit neuen Eigenschaften, wie hier im Verfahren beschrieben, erforderlich. Die kurzyklisch akquirierten Daten leisten einen großen Beitrag zur Verbesserung des Lastmanagements (kurzzyklische Bewertung der Energieflüsse, Leitungs- und Zustandsdaten), zum Ausbau des Applikationsmanagements hinsichtlich der Einführung neuer Methoden und Produkte zur Datenanalyse, zur Energie-Erzeugung, Verteilung und Optimierung. Die Einführung von neuen Verfahren in der Kundenbeziehung und im Abrechnungswesen ergibt sich hieraus dann fast zwangsläufig. Ein besonderer Stellenwert ist dabei der kurzzyklischen Interaktion mit der neuen Generation von energiebewussten Verbrauchern/ Erzeugern (ProSumern) einzuräumen. Der Verbraucher/ Erzeuger wir nur nachhaltig im Dialog mit dem Ziel, den eigenen Energieverbrauch zu optimieren, bleiben, wenn ihm auch die Möglichkeit eröffnet wird, sein kurzzyklisches Lastprofil mit den aktuellen Tarifen abzustimmen.

Das heutige Energienetz ist hochgradig heterogen. Das bedeutet, es besteht aus einer Vielzahl von unterschiedlichen Anlagenteilen, Soft- und Hardwarekomponenten. Diese sind aus unterschiedlichen Baujahren, von unterschiedlichen Herstellen etc. Zudem wird wegen der Zunahme von dezentralen, zumeist regenerativen Energiequellen das Energienetz noch stärker dezentrale Eigenschaften eines örtlich verteilten Systems aufweisen.

Die zukünftig kurzzyklisch erfassten Daten können unter anderem für folgende Anwendungen nutzbar gemacht werden:

### - Darstellung und Analyse in SCADA-Systemen (Supervisory Control and Data Acquisition)

Um die Zusammenführung von Energieerzeugung und Energieverbrauch in einem Gleichgewichtszustand steuern zu können, und dies betrifft insbesondere die einzubindende fluktuierende Energie (aus regenerativer Erzeugung wie Solar und Wind), wird es nötig sein, neben der bereits vorhandenen langzyklischen Kenndatenermittlung, kurzzyklisch Daten erheben zu können. Die Bereitstellung dieser zusätzlichen Daten verschafft im SCADA-System weitere Freiheitsgrade für das übergeordnete Lastmanagement.

### - Lokale Lastflussoptimierung

Energieerzeugung und Energiebedarf in unmittelbarer Nachbarschaft sollte im Smart Grid erkannt werden und mithilfe lokaler Lastoptimierungsmethoden zum Ausgleich gebracht werden. Dabei können auch sich selbst organisierende Systeme Verwendung finden. Dazu müssen Kenndaten aus dem Netz identifiziert werden, dessen Qualität von der zeitlichen Auflösung (kurzzyklisch) der Messdatenerhebung abhängig ist.

### - Verwendung für Energieeinkauf

Die Bereitstellung von kurzzyklischen Messdaten können im Energiehandel Wettbewerbsvorteile bedeuten.

### - Darstellung im Kundenportal

Werden den Kunden die kurzzyklischen Messdaten ihrer Smart Meter online zur Verfügung gestellt, ist das Interesse am eigenen Energieverbrauch wesentlich höher als bei statischen Tageswerten. Jede Veränderung des Energiebezuges im Haushalt wird erfasst und kann sofort in geeigneter Form dargestellt werden.

Die im Verfahren verwendete Middleware ist für die Anforderungen im intelligenten Stromnetz "Smart Grid" ausgelegt und dementsprechend entwickelt. Die Erfassung der Netzdaten erfolgt kurzzyklisch, und nicht in üblichen 15min Intervallen. Kurzzyklisch bedeutet in diesem Fall eine Erfassung von Messwerten im Zeitintervall von 20ms bis 5s für je nach Netzgröße von 1000 bis zu einigen 10000 Endgeräten.

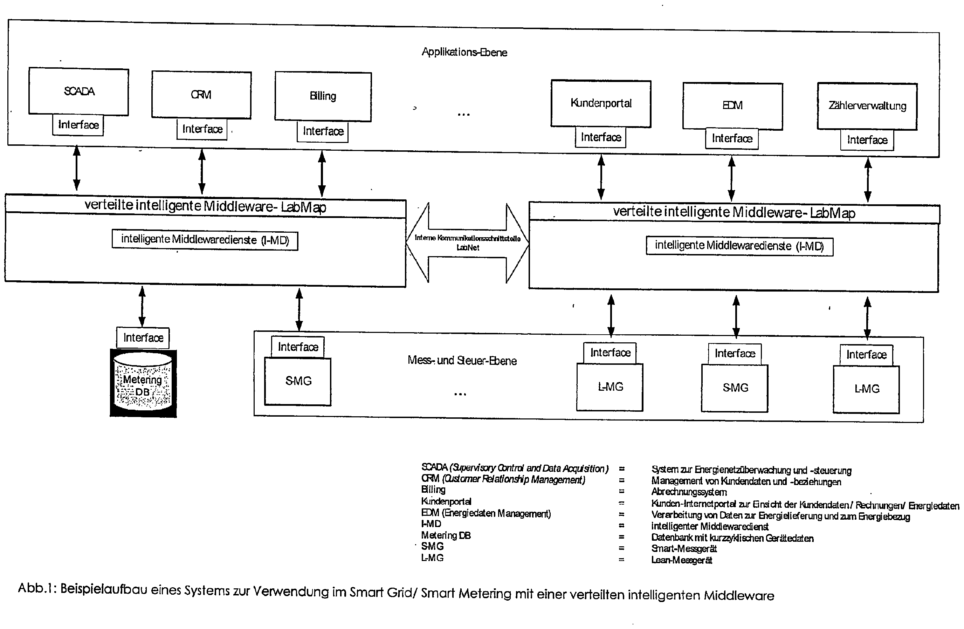

Das neue Verfahren verwendet eine verteilte intelligente Middleware im Smart Grid. Gemäß Abb.1 ist die Middleware eine Softwareebene zwischen der Applikations-Ebene und der Mess- und Steuerungs-Ebene. In der Mess- und Steuerungs-Ebene erfolgt die Datenerfassung der von Smart (S-MG) bis Lean (L-MG) ausgeführten digitalen Messgeräten. Die Intelligenz zur Ausführung von Smart Grid Funktionen ist in der verteilten Middleware implementiert. Sie steht somit in jedem verteilten Netzwerkknoten zur Verfügung. Sie kann in einer Embbeded System Architektur (Rechner mit geringem Energie- und Speicherbedarf) arbeiten. Die Middleware ist Betriebssystem- und Hardwareunabhängig ausgeführt. Sie kann bei Bedarf (Ressourcen-, Performance- und Energieoptimal bis in die Messgeräte (S-MG bzw. L-MG) als Infrastruktur integriert werden.

Ein Beispielaufbau eines Gesamtsystems zur Verwendung im Smart Grid/ Smart Metering mit einer verteilten Middleware ist zur Veranschaulichung in Abb.1 dargestellt und wird nachfolgend genauer erläutert.

Auf der oberen Seite befindet sich die Applikations-Ebene mit einem Auszug der unterschiedlichen Applikationen (App) im Smart Grid/ Smart Metering. Dort befinden sich unter anderem das SCADA (*Supervisory Control and Data Acquisition* - System zur Energienetzüberwachung und -steuerung), das *CRM (Customer Relationship Management* - Managementsystem für Kundendaten und -beziehungen), das Billing (Abrechnungssystem), ein EDM (Energiedaten Managementsystem - System zur Verarbeitung von Daten zur Energielieferung und zum Energiebezug, ein Kundenportal (Internet-Portal zu Einsicht von Rechnungs-, Verbrauchs- und Erzeugungsdaten für die Kunden) sowie eine Zählerverwaltung. Auf der unteren Seite liegt die Mess- und Steuer-Ebene mit den Messgeräten (S-MG für Smart-Messgerät/ L-MG für Lean-Messgerät). Ebenfalls ist dort eine Metering Datenbank zu finden, welche die normierten und messgerätunabhängigen Daten der unterschiedlichen Geräte beinhaltet. Die Middleware liegt als Ebene zwischen der Applikations-Ebene und der Mess- und Steuer-Ebene.

Dargestellt ist die verteilte intelligente Middleware LabMap, welche aus zwei Knoten besteht und über die interne Kommunikationsschnittstelle LabNet miteinander verbunden ist. Innerhalb der Middleware befinden sich intelligente Middlewaredienste (I-MD), die Aufgaben im Sinne von Smart Grid/ Smart Metering Fragestellungen, wie Datenreduzierung und -clusterung, übernehmen können. Interfaces verbinden die Middleware mit den Applikationen (App) in der Applikationsebene und den Messgeräten (MG) in der Mess- und Steuer-Ebene.

Gängige Verfahren sind zentral aufgebaut und implementieren die notwendige Intelligenz zur Bewältigung der Fragestellungen des Smart Grid/ Smart Metering entweder in der Applikations-Ebene oder in der Mess- und Steuerungs-Ebene. Je nach Bedarf findet auch eine Gewichtung der Intelligenz zwischen diesen beiden Ebenen statt. Die IT Infrastruktur dazwischen dient nur zur einfachen Datenkommunikation.

Die verteilte intelligente Middleware übernimmt die auszuführenden Aufgaben in Form von konfigurierbaren intelligenten Middlewarediensten (I-MD). Die Applikationsebene wird dadurch entlastet und lässt eine Vereinfachung und damit eine weitgehende Standardisierung von Anwendungen (App) in der Applikations-Ebene zu. Diese Middlewaredienste sind zum Beispiel:
- Middlewaredienst zur Anonymisierung von Daten (A-MD)
- Smart-Middlewaredienst (S-MD) zur Verarbeitung eines Lean-Messgerätes
- Lean-Middlewaredienst (L-MD) zur Verarbeitung eines Smart-Messgerätes
- Lokale Optimierung-Middlewaredienst (LO-MD) zur lokalen Datenoptimierung in der verteilten intelligenten Middleware durch Bildung von "virtuellen Haushalten" und "virtuellen Kraftwerken"
- allgemeine und weitere Middlewaredienste (MD)

Durch die Verteilung der intelligenten Middleware entstehen örtlich im gesamten Netz verteilte intelligente Knoten. Damit lässt sich eine bedarfsgerechte, flexible, virtuelle, kollektiv intelligente Netzwerktopologie aufbauen.

Bei der großen und wachsenden Zahl an Smart Metern ist die Skalierbarkeit ein wichtiger Punkt. Darunter versteht man eine Fähigkeit, ein System weiter auszubauen, ohne wesentliche Architekturänderungen vorzunehmen.

Um große Serveranlagen zu vermeiden wird die Middleware verteilt ausgeführt. Dabei können Smart Metern in Funktionsgruppen oder Endgerätegruppen (EG) zusammengefasst werden, welche jeweils von einem Middleware-Knoten (Konzentrator) betreut werden. Eine Funktionsgruppe ist beispielsweise eine gewisse Zahl von Energieverbrauchern/ dezentralen Energieerzeugern, repräsentiert durch die installierten digitalen Messgeräte. Die Verteilung der Middleware kann sich beispielsweise an der Topologie der Kommunikationsnetze orientieren. Außerdem können die Funktionen im Gesamtsystem, welche nicht ständig verfügbar sein müssen, so verteilt werden, dass einzelne Knoten nur für diese Funktionen zuständig sind. Dies ermöglicht dadurch die temporäre Deaktivierung dieser Knoten im Sinne der "green IT". Liegen Anforderungen von Funktionsgruppen hinsichtlich der Kurzzyklischkeit vor (z.B. 1000 Smart Meter sollen in einem Zyklus von 1s abgefragt werden), kann die Middleware auf diese Leistungsanforderungen zugeschnitten werden.

Die Anwendung der Middleware embedded ermöglicht den Einsatz von ressourcenarmen und genau auf die Anwendung angepassten Systemen.

Die Verwendung von Middleware embedded ermöglicht die Durchführung von Funktionen von Smart Metering in den intelligenten Knoten vor Ort, anstelle von zentralen Servern. Von einem intelligenten Knoten können dann mehrere Sensoren und Aktoren verwaltet werden. Unter Endgeräten im Smart Grid werden beispielsweise Haushalt- und Industrie-Smart Meter, MUC-Geräte (Multi-utility Communication), Komponenten von Schaltanlagen und Netzstationen, Ladestationen für Elektromobilität und andere verstanden. Vor Ort werden die Daten erfasst, aufbereitet, analysiert, weitergeleitet und bei Bedarf für eine automatische Regelung und Steuerungs-Funktion verwendet.

Die genannte Entlastung der Applikationen durch die intelligente verteilte Middleware ist besonders bei einer großen Zahl an Messgeräten mit vielen kurzzyklischen Daten ein Vorteil. Die Middleware kann die Messwerte der in Gruppen zusammengefassten Endgeräte (Endgerätegruppe EG) lokal verarbeiten und optimieren. Es werden schon vor Ort "virtuelle Haushalte" und "virtuelle Kraftwerke" gebildet und der Datenstrom zu den Applikationen (App) wird reduziert. Diese Daten können dann mit herkömmlichen Lastanalyseanwendungen mit begrenzten Berechnungsmethoden wesentlich einfacher verarbeitet werden.

Die Middleware-Knoten sind über ein Kommunikationsnetz miteinander verbunden und kommunizieren über eine integrierte Netzwerkschnittstelle. Dadurch sind dann bei Bedarf die Daten aller miteinander verbundenen Knoten überall verfügbar. Die Middleware bietet unterschiedliche interne Netzwerkschnittstellen, welche sowohl auf Unicast (LabNet - TCP/IP) als auch auf Multicast (LabPGM - PGM Pragmatic General Multicast)-basieren.

Heutiger und zukünftiger Stand der Technik im Umfeld des Smart Grid/ Smart Metering ist die Verwendung von TCP/IP-basierten Protokollen. Dies wird von der EU geförderten Programme unterstützt. Dazu gehören alle physikalischen Wege mit ausreichenden Übertragungsgeschwindigkeiten auf der TCP/IP-Basis. So wird eine kurzzyklische Datenerfassung erreicht. Dabei ist unerheblich, ob es sich um IPv4 (Internet Protocol Version 4) und IPv6 (Internet Protocol Version 6) handelt.

Um die Applikationen (App) von der Hardware zu entkoppeln, arbeitet die Middleware direkt mit dem jeweiligen Protokoll der Geräte und stellt die Informationen für die Applikationen (App) in allgemeiner und normierter Form zur Verfügung. Die Middleware bringt die Datenübertragung vom Smart Meter, von den Applikationen (App) oder von einer Datenbank über ein Interface immer auf die transparente Middleware-Ebene und steuert die Datenzugriffe.

Auf der gesamten Middleware-Ebene herrscht eine einfache und an die Verwendung im Smart Grid angepasste Form von Prozessvariablen. Jeder Typ von digitalem Messgerät und jede Applikation (App) erhält einen eigenen Satz von Variablen, welcher zum einen aus einem Basisdatensatz besteht, der für alle Messgeräte identisch ist und die notwendigen Messwerte und Kommandos enthält. Zur Erfüllung der eindeutigen Geräteidentifizierung wird ein Variablensatz z.B. an der einzigartigen Geräte-ID oder auch einer internen Gerätenummer des EVU identifiziert, und nicht anhand der variierenden kommunikationsnetzspezifischen Adressen.

Bei den digitalen Messgeräten in Form Zählern für den Haushalt kann man grob zwischen zwei Typen unterscheiden:

### - Ein Smart-Messgerät (S-MG/ Smart Meter)

Dieser Typ von Messgerät besitzt von sich aus eine Intelligenz und kann die gemessenen Werte vorab verarbeiten, um bestimmte Funktionen wie Tarifsteuerung im Gerät durchzuführen. Die Funktion der Sicherung der Richtigkeit der übertragenen Daten durch Signierung kann zum Beispiel im smarten Messgerät erfolgen.

### - Ein Lean-Messgerät (L-MG/ L-Meter)

Diese Art von Gerät ist eine kostengünstige Ausführung und erfüllt daher nur die minimalen Anforderungen für die Aufgaben Messen, Steuern und Kommunikationsfunktionen. Die Werte werden erfasst und anschließend unbearbeitet übertragen. Eine Signierung der Daten ist, falls notwendig, sehr beschränkt möglich.

Für die Anbindung der Messgeräte und der Software an die Middleware gibt es für jedes Kommunikationsprotokoll bzw. für jede Softwareschnittstelle ein spezifisches Interface. Das Interface zum digitalen Messgerät stellt die Verbindung zu den Geräten her, liest die benötigten Daten aus und aktiviert Kommandos. Um die Applikationen (App) zu entlasten, funktioniert das Interface völlig autark, kommuniziert mittels der gerätespezifischen Protokolle und aktualisiert selbstständig die Zustände der Variablen. Allen Applikationen (App) stellt die Middleware eine API (Application Programming Interface) zur Verfügung. Domainspezifische Applikationen (App) können mithilfe einer zusätzlichen dll (Dynamic Link Library) eingebunden werden. Die Kommunikation von Applikation (APP) zu Applikation (APP) wird von der Middleware bereitgestellt. Dafür können leicht Softwareagenten migriert werden, welche eigenständig Aufgaben zur Kommunikation zwischen sowie zu den Applikationen (App) bearbeiten.

Bei Verwendung von Tarifmodellen als angebotenes Produkt für die Kunden, müssen die einzelnen Messwerte den entsprechenden Tarifstufen zugeordnet werden. Diese Zuordnung kann sowohl zeitlich, nach Verbrauch oder nach Belastungsschwellenüberschreitungen gesteuert sein. Diese Zuordnung die digitalen Messgeräte in Form von Smart-Messgeräten (S-MG) selbst übernehmen. Je nach Ausführung des Gerätes ist eine bestimmte Anzahl an verschiedenen Tarifstufen möglich, für die jeweils ein geeichtes Zählwerk existiert. Die Intelligenz ist dabei im Messgerät installiert und die Tarifstrukturen müssen vollständig definiert und von der Middleware übertragen werden. Besitzt das digitale Messgerät oder der Sensor keine Intelligenz (Lean-Messgerät L-MG) und liefert nur unbearbeitete Daten, kann die Middleware die Tarifzuordnungen übernehmen, die Messwerte analysieren und in entsprechende Register ablegen.

Zur Trennung der Daten von den Kunden kann in der Middleware eine Anonymisierung erfolgen. Dabei wird der vom digitalen Messgerät (S-MG oder L-MG) erfasste Messwert (MW) in einem Anonymisierungs-Middlewaredienst (A-MD) von den Identifikationsmerkmalen des jeweiligen Messgerätes bereinigt und als Rohwert zur Verfügung gestellt. Mit diesen Werten werden dann allgemeine und statistische Rechnungen durchgeführt.

Die Verbindung zu den einzelnen Geräten wird transparent zur Anwendung vom Interface automatisch aufgebaut und gehalten, sodass alle Daten aller Messeinrichtungen dann je nach Wiederholungsrate der Auslesung und Verarbeitungsgeschwindigkeit der Smart Meter immer verfügbar sind. Bei Verbindungsabbruch wird die Kommunikation wieder aufgebaut.

Liefert das auszulesende Gerät keine Uhrzeit, wird der Zeitstempel automatisch in der Middleware hinzugefügt.

Werden im Smart Grid weitere Sensoren (Temperatur, Feuchtigkeit usw.) an Knotenpunkten installiert, können diese ohne Probleme mit an die Middleware angebunden werden.

Die Middleware kann in Verbindung mit einer Datenbank und dem dazugehörigen Interface das Datenlogging übernehmen. Das Logging wird von dem Interface zur Datenbank gesteuert und arbeitet dabei unabhängig von weiteren Applikationen (App).

Die abrechnungsrelevanten Basisdaten mit den notwendigen zählertypunabhängigen Werten werden nach der Auslesung direkt als Rohwerte in einer besonders gesicherten Metering-Datenbank abgespeichert. Diese ist redundant ausgeführt und muss die Daten aufgrund gesetzlicher Bestimmungen für längere Zeit vorhalten können. Die Datenspeicherung erfolgt losgelöst von den Applikationen (App) automatisch und funktioniert, ohne dass die Applikationen (App) aktiv sein müssen. Die Speicherung und zusätzliche Messwertkontrolle erfolgt über ein eigenes Datenbankinterface. Datenbanken mit ODBC Treiber werden standardmäßig unterstützt.

Die Kommunikation läuft pro Interface bidirektional ab, das heißt, Applikationen (App) können abgesehen vom Lesen der Variablen durch das Setzen bestimmter Variablen in der Middleware Befehle an Aktoren geben und die Befehle werden dann vom entsprechenden Interface zum Aktor übersetzt. Für Anforderungen im Smart Grid bedeutet dies beispielsweise eine Steuerung von Relaisausgängen oder Setzen von Tariftabellen oder Indikatorsignalen. Auch eine Steuerung von Energieerzeugungsanlagen ist möglich.

Eine intelligente IP-Adressverwaltung innerhalb der entsprechenden Interface der Middleware steuert bei Verwendung von Smart Metern mit Kommunikationsschnittstellen auf TCP/IP-Basis den Verbindungsaufbau zu den einzelnen Geräten. Sie verknüpft in solch einem Netzwerk die von einem DHCP (Dynamic Host Configuration Protocol) dynamisch verteilten IP-Adressen mit beispielsweise der Geräte-ID. So kann ein neu installiertes Gerät sofort automatisch erkannt und eingerichtet werden.

Unterstützen Geräte keine Uhrsynchronisation (beispielsweise über NTP- Network Time Protocol) wird von der Middleware bei jedem Verbindungsaufbau zu einem Smart Meter die Uhr automatisch synchronisiert. Die Richtigkeit der Uhrzeit im gesamten Netzwerk wird über Zeitsynchronisation der einzelnen Smart Meter untereinander oder Synchronisation mit dem Leitrechner garantiert.

Die Anforderung im Smart Grid/ Smart Metering ist, beim Datentransport von den Sensoren/ Smart Metern auf die Middleware-Ebene die vorgegebenen kurzen Erfassungszyklen sicherzustellen. Sind die Daten dort erst einmal vorhanden, können alle Applikationen (App) zur gleichen Zeit parallel auf die Daten in Form der Variablen zugreifen und müssen keine Kenntnis über die eigentlichen Übertragungsprotokolle besitzen.

Ein Ausführungsbeispiel des Verfahrens wird im Folgenden anhand der Zeichnungen Abb.2 bis Abb.5 erläutert.

Dabei sind dargestellt:
Abb.2: Ein Beispielaufbau des Verfahrens in der Übersicht bei der Kombination eines Smart-Messgerätes und eines Lean-Messgerätes.
Abb.3: Ein ausführlicher Beispielaufbau des Verfahrens bei Verwendung eines Smart-Messgerätes.
Abb.4: Ein ausführlicher Beispielaufbau des Verfahrens bei Verwendung eines Lean-Messgerätes.
Abb.5: Ein ausführlicher Beispielaufbau des Verfahrens bei Verwendung eines Smart-Messgerätes mit Anonymisierung der Messwerte.

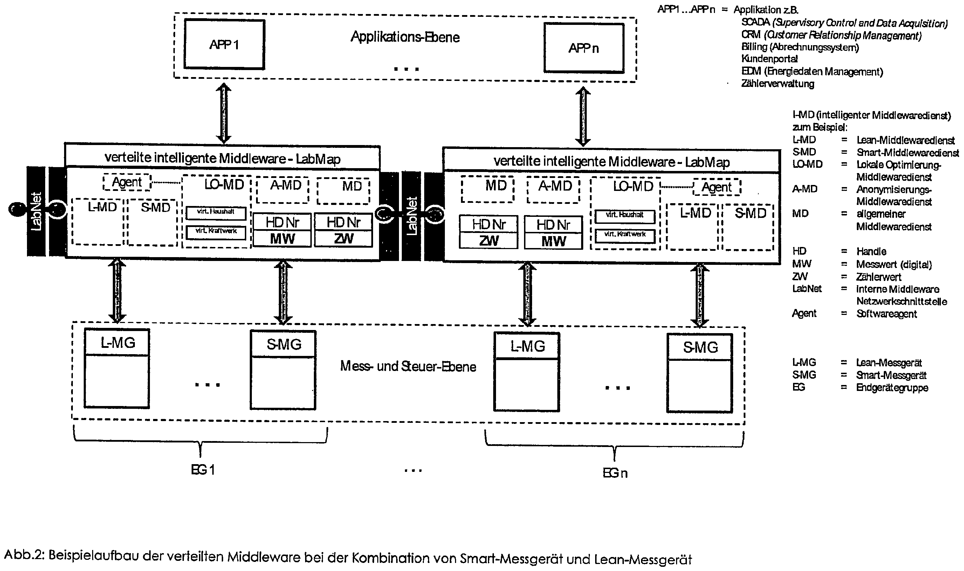

In Abb.2 ist eine Kombination in der Übersicht der beiden im nachfolgenden beschriebenen Verfahren gezeigt. Dargestellt ist die verteilte Middleware mit den unterschiedlichen intelligenten Middlewarediensten (I-MD) (S-MD/ L-MD/ A-MD/ LO-MD/ A-MD) und der internen Kommunikationsschnittstelle LabNet. Auf der unteren Seite befindet sich die bekannte Mess- und Steuer-Ebene mit Smart- Messgeräten (S-MG) und Lean-Messgeräten (L-MG). Beide Gerätetypen sind gleichermaßen an die Middleware angebunden und werden von den entsprechenden Middlewarediensten (L-MD oder S-MD) bedient. In der Regel bedienen sich die Lean-Messgeräte (L-MG) der Smart-Middlewaredienste (S-MD) und die Smart Messgeräte (S-MG) bedienen sich der Lean-Middlewaredienste (L-MD). Oben ist die Applikations-Ebene mit den Applikationen (App 1 bis App n) dargestellt. Für die Applikationen (App) sowie die Messgeräte (MG) ist es unerheblich, an welchem Punkt der Middleware sie angebunden sind. Der Lokale Optimierung-Middlewaredienst (LO-MD) verarbeitet je Datenknoten eine Zahl an gruppierten Endgeräten aus der Mess- und Steuerungs-Ebene und stellt die Daten der Applikations-Ebene optimiert und reduziert zur Verfügung.

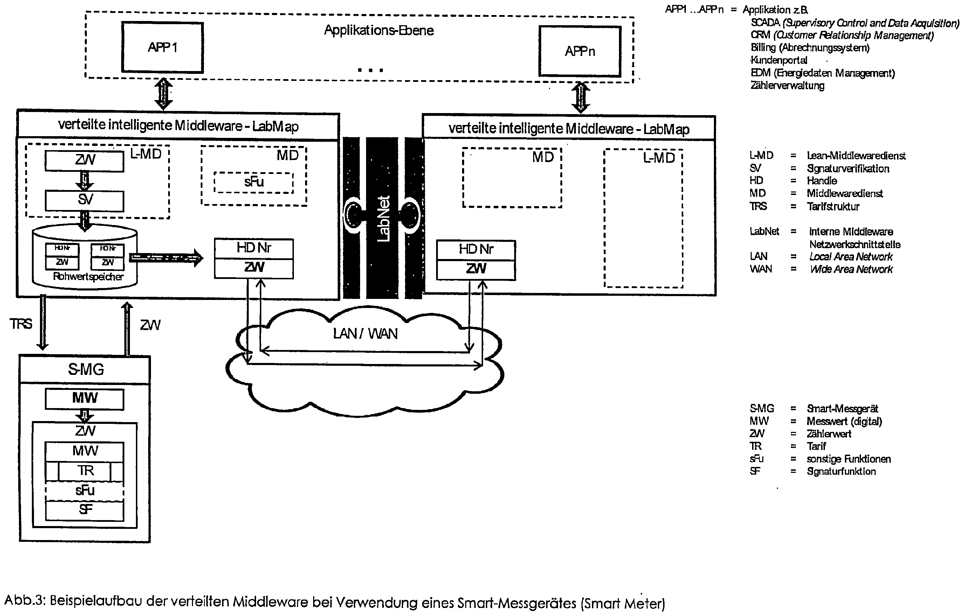

In Abb.3 ist eine verteilte intelligente Middleware - hier LabMap - dargestellt, welche aus mindestens zwei Knoten besteht. Diese Knoten sind über die integrierte Kommunikationsschnittstelle LabNet innerhalb der Middleware miteinander verbunden. Die Verbindung erfolgt beispielsweise über LAN (Local Area Network) - lokales Netzwerk - oder WAN (Wide Area Network) - ein Netzwerk mit großer räumlicher Ausdehnung.

Auf der unteren linken Seite der Middleware befindet sich ein Smart-Messgerät (S-MG) welches den Verbrauch von elektrischer Energie misst und daraus einen digitalen Messwert (MW) erzeugt. Wie bereits definiert, besitzt das Smart-Messgerät (S-MG) eine integrierte Intelligenz und kann den Messwert (MW) nach der Erfassung verarbeiten. Der Messwert (MW) wird dabei einem Tarif (TR) zugeordnet, mit den entsprechenden Tarif-Indikatoren versehen und von einer Signaturfunktion (SF) signiert. Für die richtigen Tarifzuordnungen muss über die Middleware eine Tarifstruktur (TRS) übertragen worden sein. Es ergibt sich so ein vollständiger, zur Übertragung vorbereiteter Zählerwert (ZW). Der Messwert (MW) kann zusätzlich noch im Zähler von sonstigen Funktionen (sFu) beaufschlagt werden.

Übertragen wird der signierte Zählerwert (ZW), welcher dann von der Middleware aufgenommen wird. Die Zählerwerterfassung kann sowohl im PULL-Verfahren (die Middleware fragt die Messgeräte (MG) einzeln an) als auch im PUSH-Verfahren (das Smart-Messgerät sendet seine Zählerwerte (ZW) periodisch oder eventgesteuert) erfolgen. In einem Lean-Middlewaredienst (L-MD) wird der Zählerwert (ZW) nach der Übermittlung aufgenommen, dessen Signatur mit einer Signaturverifikation (SV) geprüft und nach erfolgreicher Kontrolle als Zählerwert (ZW) in einem Handle (HD) (Speichervariable) mit eindeutiger Nummer (HD Nr) abgelegt. In einem Rohwertspeicher in der Middleware befinden sich die Handles (HD) mit dem zeitlichen Verlauf der Zählerwerte (ZW) in chronologischer Reihenfolge geordnet. Ansonsten steht in einem Handle (HD) immer der letzte erfasste Zählerwert (ZW). Ein Handle (HD) mit Zählerwert (ZW) ist einem bestimmten Messgerät (MG) zugeordnet und auf der gesamten Middleware-Ebene eindeutig. Über die Verbindung der einzelnen Middleware-Knoten mittels Kommunikationsnetz LAN/ WAN und LabNet ist das Handle (HD) mit dem Zählerwert (ZW) an jedem Punkt in der Middleware verfügbar. Weitere Middlewaredienste (MD) übernehmen zusätzliche Aufgaben und sonstige Funktionen (sFu) und können weitere Handies (HD) erzeugen. Jede Instanz der verteilten Middleware übernimmt dieselben Grundaufgaben der Messwertakquisition und Kontrolle. Weitere Middlewaredienste (MD) können aber individuell je nach Bedarf gestaltet sein.

Applikationen (App), wie die Zählpunktverwaltung, SCADA-Systeme oder Billing-Systeme können auf die Middleware zugreifen und entweder die Handles (HD) mit den geprüften aktuellen Zählerwerten (ZW), oder den zeitlichen Verlauf der Handies (HD) im Rohwertspeicher auslesen. Mit der durchgehenden Transparenz und vollständigen Verfügbarkeit der einzelnen Handles (HD) an jedem Punkt der Middleware können die Applikationen (App) überall angebunden werden.

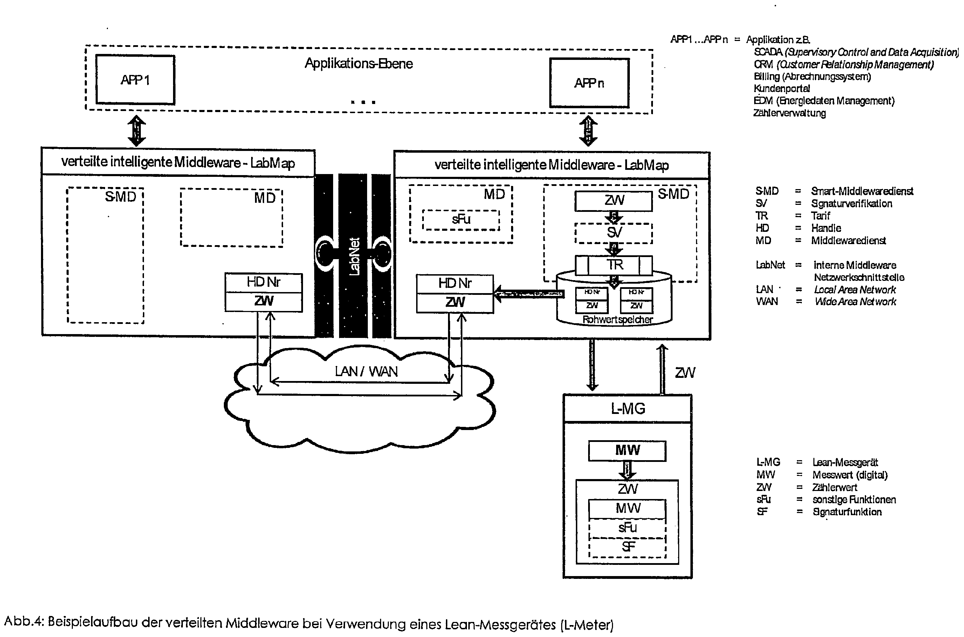

In Abb.4 ist derselbe grundsätzliche Aufbau der verteilten Middleware dargestellt, nur befindet sich hier auf der rechten unteren Seite ein Lean-Messgerät (L-MG) (L-Meter). Nach Messung des elektrischen Verbrauchs wird ebenfalls ein digitaler Messwert (MW) erzeugt. Aufgrund fehlender oder geringer Intelligenz wird der Messwert (MW) nun direkt zum übertragbaren Zählerwert (ZW) gewandelt. Eine Signaturfunktion (SF) kann unter Umständen entfallen, sonstige Funktionen (sFu) sind sehr selten implementiert.

Wie beim Smart-Messgerät (S-MG) wird nun der Zählerwert (ZW) übertragen. Dieser muss dann aber noch in der Middleware verarbeitet werden. Ein Smart-Middlewaredienst (S-MD) übernimmt dafür die Aufgaben, welche das Smart-Messgerät (S-MD) in der Wandlung zum Zählerwert (ZW) übernommen hätte. Der Zählerwert (ZW) wird, falls vorhanden, signaturverifiziert (SV) und nach der für den Zähler gültigen und hinterlegten Tarifstruktur verarbeitet, indem er in den entsprechenden Handies (HD) abgespeichert oder mit Indikatoren versehen wird. Alle weiteren Eigenschaften der Middleware entsprechen der Beschreibung der Abb.2.

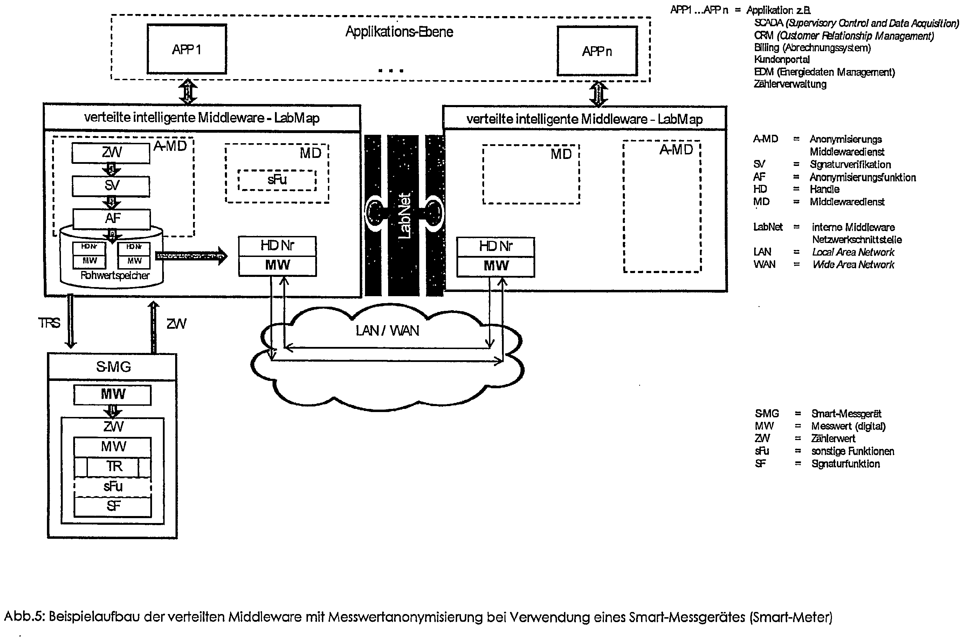

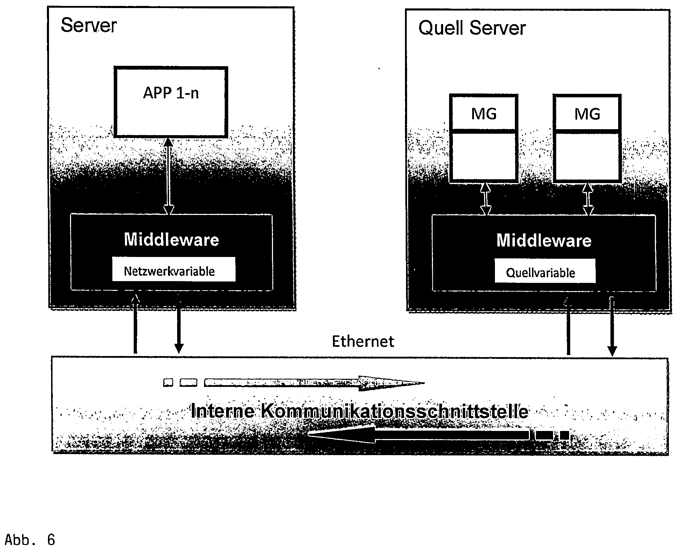

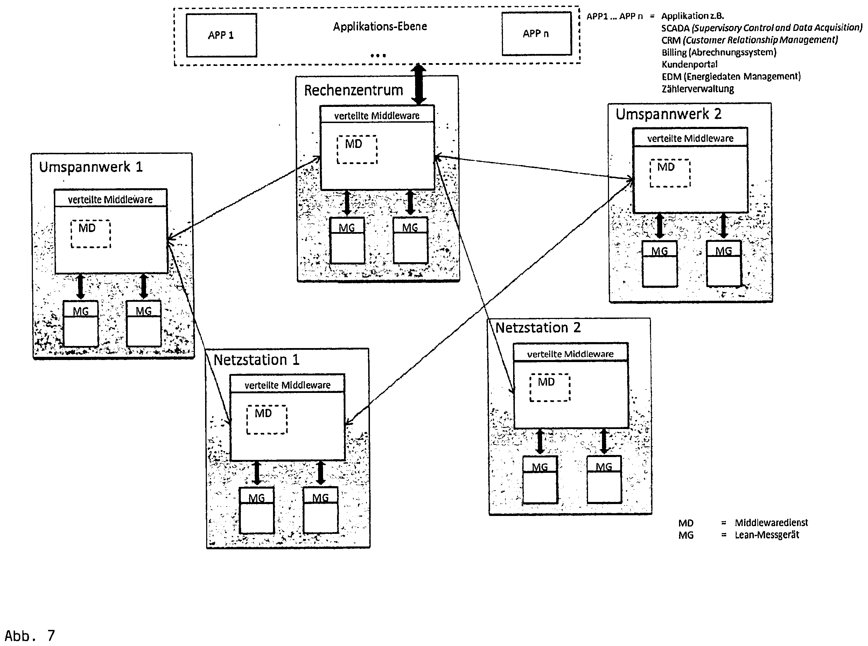

Die Abb.5 zeigt die Möglichkeit der Datenanonymisierung innerhalb der intelligenten Middleware. Der Aufbau entspricht in den Grundzügen der Abb.2. Ein Smart-Messgerät (S-MG) liefert einen signierten Zählerwert (ZW) mit Tarif- und Geräteinformationen. Dieser wird nun aber (zusätzlich zum Lean-Middlewaredienst (L-MD) oder ausschließlich) von einem Anonymisierungs-Middlewaredienst (A-MD) verarbeitet. Dabei wird die Signatur des Zählerwertes (ZW) von der Signaturverifikation (SV) geprüft und mittels einer Anonymisierungsfunktion (AF) von den Geräteinformationen getrennt. Es entsteht wieder der digitale Messwert (MW), welche in einem allgemeinen Handle (HD) abgelegt wird. Der Messwert (MW) kann dabei einem Tarif (TR) zugeordnet sein oder einen allgemeinen Gesamtwert darstellen. Die Handies (HD) mit einer eindeutigen Nummer (HD Nr) sind dann immer mit dem aktuellen Wert verfügbar oder sind chronologisch geordnet im Rohwertspeicher abgelegt.

Die Anbindung der Applikation (App) an die Middleware kann nach folgenden Beispielen erfolgen:
- Die Applikationen (App) arbeiten nur online mit den Variablen. Sie greifen auf die Variablen direkt zu und speichern die notwendigen Messwerte intern. Dies setzt aber voraus, dass die Applikation (App) so schnell wie der Datenfluss im System arbeiten kann und die Daten kurzzyklisch (20ms bis 5s) von der Middleware aufnehmen und verarbeiten kann.
- Die Applikationen (App) arbeiten nur offline mit einer Datenbank. Sie sind asynchron zum Prozess und benötigen deshalb einen persistenten Speicher. Dieser Speicher kann zum Beispiel die Rohdaten-Datenbank oder eine extra für den Verwendungszweck angelegte Datenbank sein. Die Datenbank wird von der Middleware mittels dazugehörigen Interface gefüllt.
- Die Applikationen (App) arbeiten gleichzeitig offline mit einem persistenten Speicher und online mit der Middleware. Dieser Fall ist eine Kombination aus den beiden vorherigen Fällen. Die Rohdaten werden von der Middleware direkt in eine Metering-Datenbank geschrieben und sind von der Applikation (App) so erreichbar. Die kurzzyklischen Messwerte und Kommandos sind vorhanden und stehen zur Verfügung.

### Aufgabe

Kurz- und langzyklisches Auslesen von Aktual und Verbrauchsdaten aus Smart Metern und weiteren Sensoren im elektrischen Energienetz in Intervallen von 20ms bis 5s.

### Darstellung der Messwerte auf der Middleware

Die Middleware stellt alle Informationen der Messgeräte (Messwerte, Status, Parameter, Befehle) in Prozessvariablen zur Verfügung, welche aus vier verschiedenen Datentypen bestehen kann: als Integer, als Real, als String oder als Record. Basierend auf dem Datentyp besitzt eine Variable weitere Eigenschaften wie beispielsweise eine eindeutige ID, einen Namen, einen Grenzwert, einen Skalierungsfaktor, die Einheit (nach SI Basiseinheit). Außerdem kann das Aktualisierungsverfahren der Variable eingestellt werden: manuell, zyklisch nach definierbarem Zeitintervall oder bei Änderung der Messwerte. Des Weiteren muss das Interface gewählt werden, welches mit den Messgeräten kommuniziert. Die Prozessvariablen können je nach Konfiguration entweder zum Lesen von Daten aus Messgeräten oder zum Schreiben verwendet werden.

Jede Variable für sich bildet eine Einheit und stellt ein Messwert in den konfigurierten Eigenschaften dar. Das Interface kommuniziert direkt mit den Messwerten und gibt sie an die Variablen weiter.

Zusätzlich zu den Messwerten besitzt jede Variable für sich einen eigenen Status, welcher zu jedem neuen Messwert gehört. Ein Status ist zum Beispiel "alles OK" oder "Gerät nicht erreichbar", aber auch "Grenzwert überschritten".

Die Middleware besitzt eine Programmierschnittstelle, wodurch beispielsweise eine Konfigurations-Software die Variablen erstellen und konfigurieren kann und Applikationen die Messwerte aus den vorhandenen Variablen lesen können.

Die Datenerfassung erfolgt mittels Socket-Select-Verfahren, was ermöglicht, eine großen Zahl von Smart Metern parallel anzusprechen. Durch die einfache Struktur der Variablen und die Verwendung von Interfaces zur Kommunikation mit Smart Metern bzw. Sensoren kann die Middleware außerdem im Vergleich zu herkömmlichen Smart Meter Auslesesystemen (ZFA Systeme) besonders schnell die Daten erfassen und auch bereitstellen.

### Die Middleware im Netzwerk

Die Zugriffe auf die Variablen der Middleware und über das Netzwerk werden durch zwei Mechanismen gesteuert und gesichert. Zum einen über die lokalen Eigenschaften der Variablen und zum anderen über die Eigenschaft der Netzwerkverbindung.

Zugriffskontrolle durch die lokale Definition der Variablen:
Auf die Variablen der Middleware können über die Programmierschnittstelle asynchron von verschiedenen Applikationen zugegriffen werden. Asynchron bedeutet, dass die auf die Variablen unabhängig von der Kommunikation mit den Messgeräten und unabhängig von anderen Applikationen zugegriffen werden kann. Die Berechtigungen der Zugriffe sind dabei benutzerbasiert. Jede Applikation meldet sich für die Zugriffe als Nutzer an und ist dann der Middleware bekannt. Die Middleware erstellt dynamisch zur Laufzeit eine Benutzer-Liste. Ein Lesezugriff ist für jeden Benutzer auf alle Variablen immer per default freigegeben, im Gegensatz dazu kann der Schreibzugriff durch eine Applikation gesperrt werden. Andere Applikationen können auf diese Daten dann nicht mehr zugreifen.

Die Zugriffsrechte der Middleware können in zwei Klassen unterteilt werden:
- Shared Zugriffe können von jedem Benutzer durchgeführt werden (default)
- Exclusive Zugriffe können von ausschließlich von einem Benutzer zurzeit durchgeführt werden. Dieser Benutzer kann die Variablen sperren.

Einzig der Benutzer supervisor besitzt immer alle Zugriffe. Meldet sich eine Applikation mit diesem Benutzernamen an, so kann Sie alle Variablen (auch gesperrte) verwenden.

Zugriffskontrolle durch das Netzwerkmodul und die Netzwerkeinstellungen der Middleware:
Es werden mehrere verteilte Server verwendet, welche Middleware-Knoten genannt werden können. Auf jedem Knoten des verteilten Systems kann eine Installation der Middleware implementiert werden. Jeder Middleware-Knoten wird von einer Konfigurations-Software mit den benötigten Variablen definiert, je nachdem welche Anforderungen der angebundenen Applikationen oder der implementierten Middlewaredienste bestehen. Wenn ein Knoten die Informationen in den Variablen eines anderen Knoten benötigt, dann können sie mithilfe von Netzwerkvariablen von den Quellknoten gespiegelt und aktuell gehalten werden. Dabei werden die lokal definierten Zugriffsrechte der Applikationen aus der Benutzer-Liste berücksichtigt. Die Netzwerkvariablen werden von den Applikationen wie lokale Variablen verwendet, eine Synchronisierung über das Netzwerk erfolgt automatisch durch die Middleware über die interne Kommunikationsschnittstelle.

Benötigt eine Applikation an einem Middleware-Knoten die Daten einer Prozessvariable auf einem weiteren Middleware-Knoten, so muss eine Netzwerk-Variable mit der internen Kommunikationsschnittstelle konfiguriert werden. Für die Konfiguration der Netzwerk-Variable wird zunächst eine Verbindung zum Quell-Middleware-Knoten aufgebaut. Anschließend kann dieser Middleware-Knoten entweder nach den benötigten Variablen durchsucht oder bei Kenntnis der Variablennummern diese direkt eintragen werden. Des Weiteren können Zugriffsrechte für die Netzwerk-Variablen vergeben werden.

Die Netzwerk-Variablen untereinander der Middleware-Knoten besitzen folgende Modi:
Read-only (ro) Modus: Der Middleware-Knoten mit den Netzwerk-Variablen hat keine Möglichkeit die Quell-Variablen zu verändern oder zu aktualisieren. Es können nur aktuelle Zustände der Variablen gelesen werden.
Read-write (rw) Modus: Die Variablen mit den Daten werden vollkommen zwischen den Middleware-Knoten geteilt. Lesen und Schreiben von Daten ist auf allen Seiten möglich. Ein Middleware-Knoten mit Netzwerkvariablen hat vollen Zugriff auf die Quellvariablen.

Durch eine in der Middleware integrierte Zeitsynchronisierung im UTC-Zeitformat werden automatisch die Zeitstempel unterschiedlicher Middleware-Knoten auf die jeweils lokale Zeit des Servers umgerechnet. Damit kann durch eine Applikation die Datenintegrität und -eindeutigkeit netzwerkweit geprüft werden.

### Umverteilung von Aufgaben innerhalb der Middleware

Die Netzwerkvariablen sind logisch miteinander verknüpft und stellen somit ein Middleware Netz dar. Dadurch können bei Bedarf Aufgaben auf die Middleware-Knoten verteilt wird. So muss beispielsweise ein Middleware-Knoten mit Anschluss an eine Metering Datenbank (Datenbank der erfassten Messdaten) auf die Daten aller Variablen des Messgerätes (S-MG für Smart-Messgerät/ L-MG für Lean-Messgerät) zugreifen können. Andere Middleware-Knoten können nur für die Datensammlung von einer Zahl Messgeräten und für die Bereitstellung der Informationen in Netzwerkvariablen zuständig sein.

Die Verwendung von Middlewarediensten ist modular und die Middleware-Knoten können nach Bedarf entsprechend konfigurierte Dienste anwenden. Die von verschiedenen Applikationen benötigten Daten können über das Netzwerk an die entsprechenden Middleware-Knoten zur Verfügung gestellt werden.

Die Spezialisierung der Middleware-Knoten kann zu einer Umverteilung der Aufgaben innerhalb des Middleware-Netzes verwendet werden..

### Aufgabe

Die zunehmende dezentrale Energieerzeugung durch regenerative Energien fordert ein Umdenken in der Energienetzstruktur und verlangt zur Einhaltung höchster Energieeffizienz nach möglichst lokalen Lastflussoptimierungen.

### Clusterung der Middleware

Die Middleware kann, unabhängig von den gegebenen Netzstrukturen, durch Verwenden des Lokale-Optimierung Middlewaredienstes (LO-MD) das Stromnetz durch beispielsweise Berechnungen nach bekannten Algorithmen virtuell nachbilden und automatisch lokale Lastflussoptimierungen und - berechnungen durchführen. Berechnungen können beispielsweise in virtuellen Variablen erfolgen, welche frei definiert und mit einer integrierten Script-Sprache programmiert werden können. Alle Daten in anderen Variablen der Middleware stehen dort zur Verfügung und es können die bekannten Algorithmen der Lastflussberechnungen ausgeführt werden.

Ein verteilter Middleware-Knoten kann, wenn benötigt, Zugang zu lokal oder global abgespeicherten Routing-Tabellen besitzen, welche Informationen über die logische Entfernungen zwischen Knotenpunkten im Energienetz enthalten. Diese Routing-Tabellen werden anhand bekannter Algorithmen gefüllt. Mit den Daten der Messgeräte können dann die Lastflüsse entlang der Routen in virtuellen Variablen berechnet und nachvollzogen werden. Die virtuellen Variablen können auf alle anderen Variablen sowie externe Daten, wie z.B. die Routingtabellen, zugreifen und die Berechnungen durchführen.

Virtuellen Variablen können außerdem bestimmten Berechnungsergebnisse (z.B. Summen, Mittelwerte oder Prognosen) enthalten und so die Daten von Messgeräten zusammenfassen. Eine Zusammenfassung durch beispielsweise Aufsummierung kann sowohl für die Datenerfassung (Reduzierung der Daten für Applikationen) als auch für Steuerungsanwendungen (ein Befehl für eine Gruppe) angewendet werden.

Eine Steuerung der Lastflüsse erfolgt beispielsweise durch automatisches Hinzuschalten oder Abschalten von Energieverbrauchern über Leistungsschalter (z.B. Heizungen/ Klimaanlagen/ Warmwasserspeicher) oder Hinzu- oder Abschalten von Energieerzeugern über Leistungsschalter (BHKW/ Solaranlagen/ Windkraftanlagen). Die Entscheidungen zur Durchführung von Steuerungsmaßnamen können ebenfalls in virtuellen Variablen und anhand von Rechenergebnissen erfolgen. Die Middleware arbeitet bidirektional und kann diese Aktionen lokal selbsttätig durchführen.

Bei einer Installation von Middleware-Knoten in beispielsweise Umspannwerken oder anderen Stromnetz-Knotenpunkten können die Messgeräte direkt anhand der angeschlossenen elektrischen Versorgungsleitungen mithilfe der Gruppierungs- oder Clusterungs-Funktion der Middleware organisiert werden. Die Variablen können in der Middleware dadurch entsprechenden Gruppen zugeordnet werden.

Die Zählpunktbezeichnung, welche im Energiemarkt eine eindeutige Identifikation der Energiezähler bei den Kunden ermöglicht, kann als Identifikation der Variablen auf der Middleware verwendet werden. Applikationen bei den Energieversorgern können die Variablen und die dort enthaltenen Informationen über diese Identifikation direkt adressieren.

## Patentansprüche

1. Verfahren zur verteilten, intelligenten, kurzzyklischen Datenerfassung und Steuerung für eine große Anzahl an Messpunkten nach den Anforderungen an ein intelligentes Energieversorgungsnetz, bei welchem
- mehrere im Energieversorgungsnetz verteilte Server verwendet werden, die gemeinsam eine Middleware bilden,
- durch die Middleware unter Verwendung eines Middleware-Interface Messwerte (MW) von digitalen Messgeräten und Zählerwerte (ZW) kurzzyklisch erfasst und die digitalen Messgeräte sowie weitere Sensoren und Aktoren gesteuert werden,
- die Messgeräte in Gruppen zusammengefasst sind, die jeweils einem Server zugeordnet sind, den Messwerten (MW) Tarifinformationen (TR) in der Middleware zugeordnet werden, wobei das Middleware-Interface zuständig für die Bereitstellung der Zählerwerte (ZW) und die Weiterleitung von übergeordneten Steuersignalen ist und die kurzzyklische Datenerfassung eine Erfassung von Messwerten im Zeitintervall von 20ms bis 5s für je nach Netzgröße von 1000 bis zu einigen 10000 Endgeräten und je nach Leistungsfähigkeit der digitalen Messgeräte bedeutet,
- die Messwerte (MW) und die Zählerwerte (ZW) in der Middleware durch Signaturverifikation (SV) einer Gültigkeitsprüfung unterzogen werden,
- ein Abbild des Zustandes des Energieversorgungsnetzes in Speichervariablen (HD) und einem Rohwertspeicher in der Middleware zyklisch bereitgestellt wird und Zeitstempel automatisch hinzugefügt werden,
- die Messwerte (MW) in anonymisierter Form mit einer Zähleridentifikation in der Middleware durch interne Middlewaredienste (MD) verknüpft werden,
- eine Anonymisierung von Zählerwerten (ZW) durch Ersetzen der Beschreibung des Messwertursprungs (z.B. Geräteidentifikation) mit Hilfe eines Anonymisierungs-Middlewaredienstes (A-MD) erfolgt,
- ein Middlewaredienst (MD) für eine Zuordnung der Messwerte (MW) zu Endgeräten zuständig ist und eine Zuordnung dafür sorgt, dass der Zählerwert (ZW) eines Endgerätes immer rekonstruierbar bleibt,
- die Datenerfassung und die Steuerung von internen Middlewarediensten (MD) in der Middleware übernommen werden,
- die Server über ein Kommunikationsnetzwerk miteinander verbunden sind und über interne Netzwerkschnittstellen kommunizieren, damit die Messwerte und die Zählerwerte an jedem Server verfügbar sind,
- die Kommunikation mit den digitalen Messgeräten nach einem von einem Smart-Messgerät (S-MG) oder Lean-Messgerät (L-MG) vorgegebenen Protokoll erfolgt und für die Kommunikation das Middleware-Interface eingesetzt wird, wobei ein Smart-Messgerät (S-MG) eine Intelligenz besitzt und zu einer Vorverarbeitung der Messwerte (MW) ausgebildet ist, während ein Lean-Messgerät (L-MG) keine Intelligenz besitzt und nur zur Ausgabe von unbearbeiteten Messwerten (MW) ausgebildet ist,
- für Lean-Messgeräte (L-MG) die Verknüpfung von Zählerwerten (ZW) und Tarifinformationen (TR) durch einen Middlewaredienst (S-MD) durchgeführt wird,
- für Smart-Messgeräte (S-MG) die Verknüpfung von Tarifinformationen (TR) von dem Gerät gewährleistet wird und
- ein weiterer Middlewaredienst (L-MD) eine entsprechende Tarifstruktur (TRS) des Gerätes steuert und die Synchronisation einer integrierten Uhr übernimmt.

2. Verfahren nach Anspruch 1, **dadurch gekennzeichnet, dass** zur Datensignierung, falls die Endgeräte Signaturfunktionen (SF) zur Verfügung stellen, die Signaturverifikation (SV) vom jeweils zugehörigen Middlewaredienst (L-MD bzw. S-MD) übernommen wird.

3. Verfahren nach Anspruch 2, **dadurch gekennzeichnet, dass** die Middleware die erfassten Messwerte (MW) kurzzyklisch zur Verfügung stellt, jeder Messwert (MW) einen Zeitstempel besitzt, welcher von der Middleware bei der Erfassung generiert wird, der aktuelle Messwert (MW) und seine Statusinformationen (z.B. Gültigkeit, Zeitstempel) in der Middleware immer durch eine Speichervariable (HD) verfügbar sind und ebenfalls die Messwerte (MW) chronologisch geordnet in dem Rohwertspeicher bereitgestellt werden.

4. Verfahren nach einem der vorhergehenden Ansprüche, **dadurch gekennzeichnet, dass** eine Verteilung der Datenerfassung und Steuerung über eine interne Kommunikationsschnittstelle der Middleware realisiert wird, basierend auf gängigen Netzwerkprotokollen wie TCP/IP (Transmission Control Protocol/Internet Protocol) und PGM (Pragmatic General Multicast), und je nach Konfiguration alle Daten der verteilten Knoten überall verfügbar sind.

## Claims

1. Method for the distributed, intelligent, short-cyclical data capture and system control of a large number of measurement points according to the requirements of an intelligent power supply grid, in which
- a plurality of servers distributed in the power supply grid are used, which together form a middleware,
- by means of the middleware, by using a middleware interface, measurement values (MW) of digital measurement devices and meter readings (ZW) are captured in short cycles and the digital measurement devices as well as additional sensors and actuators are controlled,
- the measurement devices are combined into groups which are assigned respectively to a server, tariff information (TR) in the middleware is assigned to the measurement values (MW), wherein the middleware interface is responsible for providing the meter readings (ZW) and forwarding superordinate control signals and the short cyclical data capture means capturing measurement values in a time interval from 20 ms to 5 s depending on the network size of 1,000 to several 10,000s of terminals and depending on the capacity of the digital measuring devices,
- the measurement values (MW) and the meter readings (ZW) in the middleware are subjected to a validation check by signature verification (SV),
- an image of the state of the power supply grid in memory variables (HD) and a raw value memory in the middleware is provided cyclically and time stamps are added automatically,
- the measurement values (MW) in anonymised form are linked to a meter identification in the middleware by internal middleware services (MD),
- an anonymisation of meter readings (ZW) by replacing the description of the measurement value jump (e.g. device identification) is performed by means of an anonymisation middleware service (A-MD),
- a middleware service (MD) is responsible for assigning the measurement values (MW) to terminals and an assignment ensures that the meter reading (ZW) of a terminal always remains reconstructible,
- the data capture and the control of internal middleware services (MD) are performed in the middleware,
- the servers are connected to one another via a communications network and communicate via internal network interfaces so that the measurement values and the meter readings are available at each server,
- the communication with the digital measuring devices is performed according to a protocol defined by a smart measuring device (S-MG) or lean measuring device (L-MG) and the middleware interface is used for communication, wherein a smart measuring device (S-MG) has intelligence and is designed for pre-processing the measurement values (MW), whereas a lean measuring device (L-MG) does not have any intelligence and is only designed for outputting unprocessed measurement values (MW),
- for lean measuring devices (L-MG) the link between meter readings (ZW) and tariff information (TR) is performed by a middleware service (S-MD),
- for smart measuring devices (S-MG) the link between tariff information (TR) is ensured by the device and
- a further middleware service (L-MD) controls a corresponding tariff structure (TRS) of the device and performs the synchronisation of an integrated clock.

2. Method according to claim 1, **characterised in that** for data signing, if the terminals provide signature functions (SF), the signature verification (SV) is performed by the respective middleware service (L-MD or S- MD).

3. Method according to claim 2, **characterised in that** the middleware provides the captured measurement values (MW) in short cycles, each measurement value (MW) has a time stamp which is generated by the middleware upon capture, the actual measurement value (MW) and its status information (e.g. validity, time stamp) in the middleware is always available in a memory variable (HD), and also the measurement values (MW) are ordered chronologically in the raw value memory.

4. Method according to any of the preceding claims, **characterised in that** a distribution of the data capture and system control is performed via an internal communication interface of the middleware, on the basis of common network protocols such as TCP/IP (Transmission Control Protocol/Internet Protocol) and PGM (Pragmatic General Multicast) and depending on the configuration all data of the distributed nodes are available everywhere.

## Revendications

1. Procédé d'acquisition de données et de commande intelligentes, distribuées, et à cycle court pour un grand nombre de points de mesure, conformément aux exigences portant sur un réseau d'alimentation en énergie intelligent, dans lequel
- plusieurs serveurs distribués dans le réseau d'alimentation en énergie sont utilisés, qui forment ensemble un intergiciel,
- l'intergiciel, à l'aide d'une interface d'intergiciel, acquiert en cycle court des valeurs de mesure (MW) d'appareils de mesure numériques et des valeurs de compteur (ZW) et commande les appareils de mesure numériques ainsi que d'autres capteurs et actionneurs,
- les appareils de mesure sont regroupés en groupes qui sont respectivement affectés à un serveur, des informations tarifaires (TR) dans l'intergiciel sont affectées aux valeurs de mesure (MW), dans lequel l'interface d'intergiciel est responsable de la fourniture des valeurs de compteur (ZW) et de la transmission de signaux de commande amont et l'acquisition de données à cycle court signifie une acquisition de valeurs de mesure dans l'intervalle de temps de 20 ms à 5 s pour, selon la taille du réseau, 1000 à plusieurs fois 10 000 terminaux, et selon les performances des appareils de mesure numérique,
- les valeurs de mesure (MW) et les valeurs de compteur (ZW) dans l'intergiciel sont soumises à un contrôle de validité par vérification de signature (SV),
- une image de l'état du réseau d'alimentation en énergie est fournie cycliquement dans des variables mémoire (HD) et une mémoire de valeurs brutes dans l'intergiciel et des horodatages sont automatiquement ajoutés, les valeurs de mesure (MW) sont associées sous forme anonyme à une identification de compteur dans l'intergiciel par des services d'intergiciel internes (MD),
- une anonymisation des valeurs de compteur (ZW) a lieu en remplaçant la description de l'origine de la valeur de mesure (par ex. identification de l'appareil) à l'aide d'un service d'intergiciel d'anonymisation (A-MD),
- un service d'intergiciel (MD) est responsable d'une affectation des valeurs de mesure (MW) aux terminaux et une affectation garantit que la valeur de compteur (ZW) d'un terminal peut toujours être reconstruite,
- l'acquisition des données et la commande sont assumées par des services d'intergiciel internes (MD) dans l'intergiciel,
- les serveurs sont reliés entre eux par un réseau de communication et communiquent via des interfaces réseau internes afin que les valeurs de mesure et les valeurs de compteur soient disponibles au niveau de chaque serveur,
- la communication avec les appareils de mesure numériques a lieu selon un protocole prédéterminé par un appareil de mesure intelligent (S-MG) ou un appareil de mesure allégé (L-MG) et l'interface d'intergiciel est utilisée pour la communication, dans lequel un appareil de mesure intelligent (S-MG) possède une intelligence et est conçu pour prétraiter les valeurs de mesure (MW), tandis qu'un appareil de mesure allégé (L-MG) ne possède aucune intelligence et est conçu uniquement pour fournir en sortie des valeurs de mesure non traitées (MW),
- pour les appareils de mesure allégés (L-MG), l'association des valeurs de compteur (ZW) et des informations tarifaires (TR) est réalisée par un service d'intergiciel (S-MD),
- pour les appareils de mesure intelligents (S-MG), l'association des informations tarifaires (TR) est garantie par l'appareil, et
- un autre service d'intergiciel (L-MD) commande une structure tarifaire correspondante (TRS) de l'appareil et assume la synchronisation d'une horloge intégrée.

2. Procédé selon la revendication 1, **caractérisé en ce que**, pour la signature de données, si les terminaux mettent à disposition des fonctions de signature (SF), la vérification de signature (SV) est assumée par le service d'intergiciel associé respectif (L-MD ou S-MD).

3. Procédé selon la revendication 2, **caractérisé en ce que** l'intergiciel met à disposition en cycle court les valeurs de mesure (MW) acquises, chaque valeur de mesure (MW) présente un horodatage généré par l'intergiciel pendant l'acquisition, la valeur de mesure actuelle (MW) et ses informations d'état (par exemple validité, horodatage) sont toujours disponibles dans l'intergiciel à travers une variable mémoire (HD) et les valeurs de mesure (MW) sont également fournies dans la mémoire de valeurs brutes par ordre chronologique.

4. Procédé selon l'une des revendications précédentes, **caractérisé en ce qu'**une distribution de l'acquisition de données et de la commande est réalisée via une interface de communication interne de l'intergiciel, sur la base de protocoles de réseau courants tels que TCP/IP (Transmission Control Protocol/lnternet Protocol) et PGM (Pragmatic General Multicast), et selon la configuration, toutes les données des noeuds distribués sont disponibles partout.
